# EUROPEAN PATENT SPECIFICATION

(11) **EP 2 420 885 B1**
(45) Date of publication and mention of the grant of the patent: **18.09.2013**
(21) Application number: 11177805.6
(22) Date of filing: 17.08.2011
(51) Int. Cl.: G02F 1/167

(54) **Switchable imaging device using mesoporous particles**
Schaltbare Bildgebungsvorrichtung unter Verwendung mesoporöser Partikel
Dispositif d'imagerie commutable utilisant des particules mésoporeuses

(30) Priority: 19.08.2010 US 375194 P
(43) Date of publication of application: 22.02.2012
(73) Proprietor: Delta Electronics, Inc., Taoyuan Hsien 333 (TW)
(72) Inventor: Hwang, Jiunn-Jye, 234 New Taipei City (TW); Tsai, Min-Chiao, 71841 Tainan City (TW); Liang, Rong-Chang, Cupertino, CA California CA 95014 (US)
(74) Representative: Pulieri, Gianluca Antonio

(56) References cited:
- JP-A- 2003 344 882
- JP-A- 2004 354 890
- JP-A- 2008 083 266
- US-A1- 2005 256 224
- ROUQUEROL J ET AL: "RECOMMENDATIONS FOR THE CHARACTERIZATION OF POROUS SOLIDS", PURE & APPLIED CHEMISTRY, PERGAMON PRESS, OXFORD, GB, vol. 66, no. 8, 1 January 1994 (1994-01-01), pages 1739-1758, XP001208381, ISSN: 0033-4545

## Description

### CROSS REFERENCE TO RELATED APPILCATIONS

This application claims the priority of U.S. Provisional Application No. 61/375,194 filed on August 19, 2010, entitled "MESOPOROUS PARTICLES, CHARGE CONTROLLING AGENTS AND SWITCHABLE IMAGING DEVICE USING MESOPOROS PRATICLES AND CHARGE CONTROLLING AGENTS".

### BACKGROUND OF THE INVENTION

### Field of the Invention

The present invention relates to a switchable display device using mesoporous particles suspended in air.

### Description of the Related Art

As an information display device substitutable for liquid crystal displays (LCDs), information display devices applying technology such as an electrophoretic, electro-chromic, a thermal, dichroic-particles-rotary, electrodeposition, or cholesteric liquid crystals have been proposed to replace LCDs.

For information display devices, it is highly desirable to have an inexpensive visual display device having a wide viewing angle which is close to normal printed matter that is readable under various lighting conditions including sunlight. Also, when compared to LCDs, it is advantageous to have smaller power consumption and higher image bistability that maintains a readable image, even when power is turned off, and operation costs as low as that of traditional paper. Electronic paper (E-paper) is a display technology designed to mimic the appearance of ordinary ink on paper. Compared to a conventional flat panel display which uses a backlight to illuminate its pixels, electronic paper reflects light like ordinary paper and is capable of holding text and images without requiring electricity, while allowing the image to be changed later.

Particle-based displays, such as an electrophoretic display device and a dry powder type display device, are widely used in E-papers. Particle-based displays comprise a plurality of independently addressable display cells arranged in an array, where each display cell comprises a plurality of pigment particles that are held between a pair of opposing, spaced-apart electrodes.

The electrophoretic display device influences the movement of charged pigment particles suspended in a colored dielectric solution based on electrophoresis phenomon. However, the main problem occurred in the electrophoretic display device is a low response rate because high viscosity resistance would be arisen from the charged pigment particles. Furthermore, pigment particles with high specific gravity such as titanium oxide are typically used as the white pigment particles and dispersed in the colored dielectric solution of low specific gravity. Thus, the large difference in specific gravity between the white pigment particles and the colored dielectric solution tends to result in undesirable sedimentation and aggregation or flocculation upon aging, which makes it difficult for the dispersion state and the display characteristics to be stably maintained. While using microencapsulating, a cell size is diminished to a microcapsule level in the range of about 50 to 100 µm in order to reduce the probability of excessive sedimentation or flocculation, but the underlying problem is not overcome at all.

The dry powder type display device is a particle-based display device without using a liquid solution. The typical dry powder type display device comprises two kinds of dry pigment particles with contrast colors and charges disposed between a pair of electrodes having different potentials. An electrostatic field produced by the two electrodes is applied to the pigment particles to make them move for imaging. In addition, the attractive force (electrical and non-electrical) between the electrodes and the dry pigment particles enable us to store the image with "no electric power", thereby leading to ultra-low power consumption of such dry powder type E-paper.

There are, however, some problems associated with the dry powder type display device. First of all, charge density of the pigment particles is the most important parameter in controlling the force generated by the electric field and an adhesive force between the pigment particles and the electrodes. However, due to the low charge density of pigment particles, the dry powder type display device needs a higher voltage than the electrophoretic display device to work. For example, the voltage of controlling the particle movement of the dry powder type display device is usually at around several tens of volts, and the driving voltage is near hundreds volts. Although the charge density of dry powder may be increased or stabilized by triboelectric interactions among the pigment particles or by using suitable charge controlling agents, the driving voltage and the time needed to reach a given contrast ratio are still hard to be reduced. As predicted by the DLVO (Derjaguin, Landau, Verwey and Overbeek) theory, low charge density particles also tend to aggregate or flocculate through a secondary potential minimum because the van der Waals force may become the prevailing particle-particle interaction, as compared to Columbic repulsion. Both the reduction of charge density and the particle aggregation or flocculation result in an increase of the driving voltage or time needed to reach a given contrast ratio. Furthermore, they also result in changes in the threshold voltage and operation temperature latitude and consequently cause difficulties in image modulation, and image stickiness or ghost images.

In addition, it is difficult to achieve precision control of charge amounts or to significantly increase charge density of the pigment particles.

In general, the pigment particles used in the dry powder type display device are manufactured by either pulverization or chemical polymerization. Pulverization involves a milling process in which polymer resins, pigments, and charge controlling agents (hereinafter referred as to the "CCAs") are fused and kneaded, and then crushed and classified. There are, however, problems associated with the pulverized particles manufactured by pulverization. A desired charge density of the pulverized particles may not be easily obtained since it is difficult to control the amount of CCAs attached on the surface of the particle, and which also results in the low charge density. Another problem associated with the pulverization is that the size of pulverized particles is usually big (e,g, >8 µm) and the size distribution is relatively wide.

Although spherical particles having a narrow particle size distribution may be manufactured by a polymerization method such as suspension polymerization, emulsion polymerization or dispersion polymerization, the CCAs would hinder polymerization during particle preparation because the ionic characteristic of CCAs acts as extra surfactants.

Secondly, when dense inorganic pigment particles such as TiO₂ (specific gravity ~4) is employed as a white pigment, it is very difficult for gravity densities to be reduced. This problem may be eliminated or alleviated by mixing or coating the dense inorganic pigment particles with a suitable polymer to reduce the specific gravity to that of the air. However, dielectric medium in dry powder type image display device, e.g. air, has a relatively low refractive index compared to most polymers. As a result, specific gravity reduced pigment microcapsules having a thick polymeric shell or matrix typically show a low hiding power or low light scattering efficiency, as compared to non-capsulated pigment particles having high specific gravity.

Thirdly, the typical dry powder type display device shows unsatisfactory reflectance or whiteness. In practice, the white pigment particles are manufactured through either pulverization or chemical polymerization by filling white pigment such as titanium oxide (TiO₂), zinc oxide or zirconium oxide into a base polymer resin. Although a larger amount of the pigments such as titanium oxide can be added for achieving excellent whiteness of pigment particles, scattering becomes insufficient resulting in a decreased white refraction index to, whereby a high gravity density issue will also arise which may deteriorate bistability of the device. For the poor reflectance issue of current dry powder systems, the hiding power of the white particles is largely determined by the packing density and the colloidal stability of the particles electrically attracted to the electrode plate. For narrow particle size distribution particles, the maximum packing densities for cubical and tetrahedral packing structures are about 52% and about 74% by volume, respectively. The particle packing density of a current dry powder device is much lower than the maximum because the particle size is large and size distribution for the particles is wide, which results in a significant deterioration of minima in reflectance (Dmin).

Therefore, there exists a need for pigment particles with optimal characteristics for application in all-types of particle-based switchable imaging displays. Desirable particle characteristics include high charge density, low gravity density, stability against agglomeration, good hiding power, high contrast ratio, and other particle characteristics which provide for a wider latitude in the control of switching rate.

Electrophoretic display devices having mesoporous charged particles dispersed in an insulating liquid dispersion medium (e.g. isoparaffin) are described in US 2005/256224 A1, JP 2003344882 and JP 2004354890.

### BRIEF SUMMARY OF THE INVENTION

One of the broader forms of an embodiment of the present invention involves a switchable imaging device according to appended claim 1. The switchable imaging device includes a plurality of particles suspended in air, at least some of the particles being electrically charged, at least some of the particles being mesoporous particles.

Another one of the broader forms of an embodiment of the present invention involves a full color switchable imaging device. The full color switchable imaging device includes the switchable imaging device described above and a color filter disposed adjacent to the switchable imaging device.

A detailed description is given in the following embodiments with reference to the accompanying drawings.

### BRIEF DESCRIPTION OF THE DRAWINGS

The present invention can be further understood by reading the subsequent detailed description and examples with references made to the accompanying drawings, wherein:

FIG. 1 shows a schematic diagram showing a cross-section view of a switchable imaging device according to an embodiment of the present invention; and

FIG. 2 shows a schematic diagram showing a top view of a switchable imaging device according to another embodiment of the present invention.

### DETAILED DESCRIPTION OF THE INVENTION

The following description is of the best-contemplated mode of carrying out the invention. It is understood that the following disclosure provides many different embodiments, or examples, for implementing different features of the invention. Specific examples of components and arrangements are described below to simplify the present disclosure. These are, of course, merely examples and are not intended to be limiting. For example, the formation of a first feature over, above, below, or on a second feature in the description that follows may include embodiments in which the first and second features are formed in direct contact, and may also include embodiments in which additional features may be formed between the first and second features, such that the first and second features may not be in direct contact.

A switchable imaging device using mesoporous particles is provided according to embodiments of the present invention. Mesoporous materials may provide several advantages than normal materials due to their large surface area, open porosity, small pore sizes, and the ability to coat the surface of the mesoporous structure with one or more compounds. That is, mesoporous particles are able to contain more charges than that of typical nonporous particles by adsorption of charging species or a charge controlling agent onto the mesoporous particles, resulting in substantially improved charge density. Furthermore, the bulk density would be greatly reduced due to their open porosity, and significantly enhanced light scattering because they have the highest difference of refractive index between the pigment and air as the dispersing medium. Thus, the switchable device using the mesoporous particles according to embodiments of the present invention would have high charge density, low gravity density, stability against agglomeration, good hiding power and high contrast ratio. The problems occurred in the conventional switchable imaging device would be overcome. The switchable device may be an electronic display, signage, a bulletin board, a price tag, a digital barcode, a digital coupon, an e-paper device, or an e-reader device.

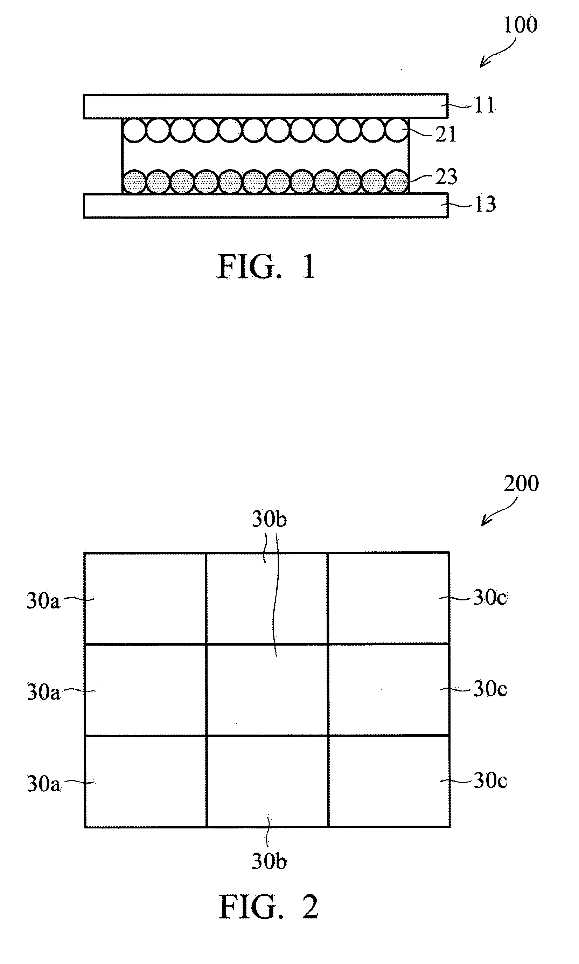

Referring to Fig. 1, illustrated is a schematic diagram of a cross-section view of a switchable imaging device 100 according to an embodiment the present invention. In a preferred embodiment, the switchable device 100 may be an e-paper device. In particular, the switchable imaging device 100 may comprise a particle-based dry powder type e-paper device. As shown in Fig.1, the switchable imaging device 100 may comprise a top substrate 11 and a bottom substrate 13 opposite to each other with a predetermined distance therebetween. A plurality of particles 21 and 23 are suspended or dispersed in a medium which is disposed within the space defined by the top substrate 11 and the bottom substrate 13. At least some of the particles 21 and 23 are mesoporous particles, and at least some of the particles 21 and 23 are electrically charged. In this embodiment, only one of the particles 21 and particles 23 may be mesoporous particles, and the other one may be other type pigment powders, such as carbon black. Alternatively, both of particles 21 and 23 may be mesoporous particles. Preferably, at least some of the mesoporous particles may be charged and at least some of charged mesoporous particles surrounded are charged or statically charged. In an embodiment, as the switchable imaging device being the dry powder type e-paper device, the medium is air. The top substrate 11 and the bottom substrate 13 may comprise electrodes having different potentials formed thereon.

In the present embodiment, the particles 21 and 23 may be mesoporous particles which may include but are not limited to porous metal oxides, inorganic dielectrics, and inorganic semiconductors having pores of substantially uniform diameter, shape of cross-section, and/or orientation. The particles 21 and 23 may be used as pigment particles for imaging colors in the switchable imaging device.

In an embodiment, the mesoporous particles may be expressed by the formula: MmYy, where M may be an inorganic element selected from Ti, Mn, Mg, Co, Ni, Al, Cr, Si, Cu, Ag, Zn, Ba, Ca, Fe, Zr, Sn, Pb, Ta, Cd, V, Nb, W, Hf, Ge, Sb, or Mo, m is the number of moles or mole fraction of M, Y may be nitrogen, oxygen, sulphur, or hydroxyl, and y is the number of moles or mole fraction of Y. Furthermore, in order to enhance the light scattering efficiency or hiding power of the mesoporous particles 21 and 23 in various of the switchable imaging devices, the mesoporous particles are preferably formed from a material of high refractive index which is preferably greater than about 2, or more preferably greater than about 2.5. Suitable high refractive index materials for the mesoporous particles may include, but are not limited to, metal oxides such as oxides of Ti, Zn, Zr, Ba, Ca, Mg, Fe, Al, or the like. For example, the mesoporous particles MₘY_{y} having high refractive index may be TiO₂, NiO, MgO, Cr₂O₃, or Fe₂O₃. In particular, rutile TiO₂ mesoporous particles are preferred because of their superior whiteness and light fastness.

In another embodiment, the mesoporous particles may be expressed by the formula: MₘNₙY_{y}, where M and N are independently inorganic elements which may be independently selected from the group consisting of Ti, Mn, Mg, Co, Ni, Al, Cr, Si, Cu, Ag, Zn, Ba, Ca, Fe, Zr, Sn, Pb, Ta, Cd, V, Nb, W, Hf, Ge, Sb, Mo, In, C, N, S, and F, m is the number of moles or mole fraction of M, n is the number of moles or mole fraction of N, Y is nitrogen, oxygen, sulphur or hydroxyl, or a combination thereof, and y is the number of moles or mole fraction of Y.

In still another embodiment, the mesoporous particles may be expressed by the formula: MₘY_{y}Z_{z}, where M is an inorganic element selected from the group consisting of Ti, Mn, Mg, Co, Ni, Al, Cr, Si, Cu, Ag, Zn, Ba, Ca, Fe, Zr, Sn, Pb, Ta, Cd, V, Nb, W, Hf, Ge, Sb, Mo, In, C, N, S, and F, m is the number of moles or mole fraction of M, Y is nitrogen, oxygen, sulphur or hydroxide, or a combination thereof, y is the number of moles or mole fraction of Y, Z is nitrogen, oxygen, sulphur or hydroxide, or a combination thereof, and z is the number of moles or mole fraction of Z. Preferably, the mesoporous particles may be TiOₐ (OH) _{b}, NiOₐ (OH)_{b}, or MgOₐ(OH)_{b}, where a and b are integers and a sum of a and b is 2 or 3.

For example, in the present embodiment, in addition to the superior characteristics of TiO₂ mesoporous particles, addition of transition metal ions, such as V, Cd, Al, Zr, Fe, Ag, Co or Cu selected from the periodic table, or organic atoms, such as F, Si, N, S, C or the like, as dopants may be used to alter the band gap and color appearance of the TiO₂ mesoporous particles. In a preferred embodiment, these doped mesoporous TiO₂ particles may directly serve as colorful pigments to assembly a color switchable imaging device and may show different charge density through heteroatom doping.

The mesoporous particles are free-flowing dry particles, and may have an average particle size of from, for example, 0.05 µm to 20 µm, or 0.1 µm to 5 µm, or other suitable ranges, depending on requirement. Alternatively, the mesoporous particles are aggregates of primary particles having an average diameter of, for example, from 0.001 µm to 0.5 µm, or from 0.01 µm to 0.3 µm, or from 0.1 µm to 0.3 µm, or other suitable ranges, depending on requirement. The mesoporous particles have an average pore size from 3 nm to 50 nm, or other suitable sub-ranges thereof, depending on requirement. BET (Brunauer-Emmett-Teller) surface area may be ranged from about 1 to 500 m²/g. The mesoporous particles may comprise pores in a form of column, disc, sheet, or aggregates thereof.

In an embodiment, the mesoporous particles may be formed by using typical synthetic method by means of a structure-directing or liquid crystal templating technique. In the typical synthetic method, the mesoporous particles are prepared with the aid of an ionic or non-ionic (polymeric or small mocecular) structure-directing agent, such as cetyltrimethylammonium bromide (CTAB) or poly(ethylene oxide)-poly(propylene oxide) triblock copolymer (P123). In another embodiment, the mesoporous particles may be synthesized by using inorganic precursors and structure-directing agents different from the precursors and structure-directing used in the typical method. For example, the structure-directing agent may be organic acids, urea, or long chain amine such as hexadecylamine, or a combination thereof. The inorganic precursor may be titanium tetra-isopropoxide, TiCl₄ and TiOSO₄, or a combination thereof. The mesoporous particles may be synthesized through a combination of sol-gel and hydrothermal process. For example, in an embodiment of synthesis of TiO₂ mesoporous particles, the TiO₂ mesoporous particles may be synthesized through a sol-gel process in combination with a hydrothermal reaction from different carboxylic acids (e.g., butyric or valeric acid) as templates and titanium tetra-isopropoxide in presence of water. A solution comprising 0.1 to 100 equivalents, or preferably 1 to 30 equivalents, of carboxylic acid and 1 equivalent titanium tetra-isopropoxide and a solvent of ethanol is prepared. The solution then may be heated at 30 to 150°C, preferably at 50 to 125°C, for several hours, for example, 0.1 to 24 hours. Subsequently, a solution of deionized water and ethanol with a ratio of 0.01 to 100 may be added to the heated solution for precipitating TiO₂ particles. The precipitate is collected by centrifuging to yield a sphere precursor. Then, the sphere precursor is hydrothermaled at an elevated temperature, preferably between 50 and 250°C and calcined at high temperature 200 to 1200°C. The resulted TiO₂ mesoporous particles may have a spherical morphology with an average particle size ranging from several tens nm to micron meters and a BET area ranging from 1 to 500 m²/g. In this embodiment, the mesoporous particles, more particularly TiO₂ mesoporous particles, may be spheres and can provide a higher surface area and a larger pore size than the mesoporous particles formed using typical synthetic method.

In an embodiment, according to the use of the switchable imaging device, the particles 21 and 23 may be optionally coated with a colorant. The colorant may be a dye, pigment or a precursor of a dye or pigment. In particular, the colorant may have pair of contrast colors selected from black and white, blue and white, red and white, or green and white, or the pair of contrast colors is selected from black and white, black and cyan, black and magenta, or black and yellow, respectively. Thus, particles 21 and 23 may have contrast colors to each other. For example, in the present embodiment, the particles 21 may be coated with white colorant and the particles 23 may be coated with black colorant. In another embodiment, the particles 21 and 23 may be doped mesoporous particles which may directly serve as colorful pigments without coating with colorants as described above.

Furthermore, the surfaces of the particles 21 and 23 may be distributed with a plurality of positive and negative charges, respectively. For example, the particles 21 may be distributed with a plurality of positive charges, and the particles 23 may be distributed with a plurality of negative charges, or vice versa. When an electric field formed between the top substrate 11 and the bottom substrate 13, the particles 21 and 23 may migrate toward the bottom substrate 13 and the top substrate 11, respectively. As a result, a designed frame can be shown due to proper control of the potential of each pair of electrodes on relative locations on the top substrate 11 and the bottom substrate 13.

In an embodiment, the particles may be mesoporous particles 21 and 23 which are charged with charging species or a charge controlling agent (CCA) other than doping with hetero-atoms. Compared to conventional polymeric colloid particles, the mesoporous particles loaded with the charging species or the CCA may have lighter weights and higher charge densities. Thus, the switchable imaging device using mesoporous particles with the charging species or the CCA according to embodiments of the present invention would have a reduced operation voltage and an enhanced performance as well as a reduced manufacturing cost. In an embodiment, the mesoporous particles may be charged by tribo-electric interaction, electron transfer, proton transfer, or acid-base reaction on the plurality of mesoporous particles. For example, the mesoporous particles may be charged by physical adsorption or chemisorption of the charging species or the CCA onto the plurality of mesoporous particles for performing electron transfer, proton transfer or directly carrying the charges. The charging species or the CCA may be a donor of electron or proton. Alternatively, the charging species or the CCA may be an acceptor of electron or proton. The mesoporous particles with the charging species or the CCA may have lighter weights and higher charge densities than conventional polymeric colloid particles, thereby the operation voltage switchable imaging device according to embodiments of the present invention would be significantly reduced. Also, in addition to carry the charging species or the CCA, the mesoporous particles may be coated with a polymer layer for performing tribo-electric interaction therebetween. Thus, the charge density of such mesoporous particles can be further adjusted, such as high charge density to give faster switching performance.

According to the present invention, the electron accepting or proton donating compounds of the charging species may include, but not limited to, alkyl, aryl, alkylaryl or arylalkyl carboxylic acids and their salts, alkyl, aryl, alkylaryl or arylalkyl sulfonic acids and their salts, tetra-alkylammonium and other alkylaryl ammonium salts, pyridinium salts and their alkyl, aryl, alkylaryl or arylalkyl derivatives, sulfonamides, perfluoroamides, alcohols, phenols, salicylic acids and their salts, acrylic acid, sulfoethyl methacrylate, styrene sulfonic acid, itaconic acid, maleic acid, hydrogen hexafluorophosphate, hydrogen hexafluoroantimonate, hydrogen tetrafluoroborate, hydrogen hexafluoroarsenate (V), or the like. Alternatively, the electron accepting or proton donating compounds of the charging species may include organometallic compounds or complexes containing an electron deficient metal group such as tin, zinc, magnesium, copper, aluminum, cobalt, chromium, titanium, zirconium or derivatives or polymers thereof.

According to the present invention, the electron donating or proton accepting compounds of the charging species may include, but are not limited to, amines, particularly tert-amines or tert-anilines, pyridines, guanidines, ureas, thioureas, imidazoles, tetraarylborates, or the alkyl, aryl, alkylaryl or arylalkyl derivatives thereof. Alternatively, the electron donating or proton accepting compounds of the charging species may include a copolymer reacted from at least two monomers of 2-vinyl pyridine, 4-vinyl pyridine,2-N,N-dimethylaminoethyl acrylate, styrene, alkyl acrylates, alkyl methacrylates, or aryl acrylate. For example, the charging species may be poly(4-vinylpyridine-co-styrene), poly(4-vinlypyridine-co-methyl methacrylate), poly(4-vinlypyridine-co-butyl methacrylate), or the like.

In accordance with one embodiment of the present invention, the charge controlling agent is a positive charge controlling agent selected from the group consisting of quaternary ammonium salts, pyridinium salts, onium salts, squarium salts, metal salts, nigrosine dye, polyamine resin, triphenylmethane compound, imidazole derivatives, amine derivatives, and phosphonium salt. In accordance with another embodiment of the present invention, the charge controlling agent is a negative charge control agent selected from the group consisting of metal complexes of salicylic acid, alkylsalicylic acid, azo dye, calixarene compound, benzyl acid boron complex, sulfonate salt, and fluorocarbon derivatives. Preferably, the metal complexes of salicylic acid may comprise a metal selected from the group consisting of Cr, Zn, Mg, Co, Al, B, Ni, Fe, and Cu.

Furthermore, the mesoporous particles may be further overcoated with a polymer layer to improve tribo-electric interaction and/or to prevent charge leakage from highly charged mesoporous particles to electrode when contacting with electrode during switching. This charge leakage could reduce charge density of charged mesoporous particles resulting in slower switching speed and performance deterioration. In an embodiment, the polymers to enhance tribo-electric interaction between polymer-coated mesoporous particles may include, but are not limited to, polytetrafluoroethylene, poly(vinyl chloride), polypropylene, polyethylene, polystyrene, poly(vinylidene chloride), poly(bisphenol A carbonate), polyacylonitrile, epoxy resin, poly(ethylene terephthalate), poly(methyl methacrylate), poly(vinyl acetate), poly(vinyl alcohol), polyamide, or the like.

In summary, the embodiment according to the present invention provides a switchable device comprising a plurality of particles. At least some of the particles 21 and 23 are mesoporous particles, and at least some of the particles 21 and 23 are electrically charged. The mesoporous particles is prepared by reducing a mixture comprising: (1) a solvent or continuous phase, (2) a source of metal dissolved in the solvent or continuous phase, and (3) a structure-directing agent present in an amount sufficient to form a liquid crystalline phase in the mixture, to form a composite of metal-based material and organic matter, or by reducing a mixture comprising: (1) a solvent or continuous phase; (2) a source of metal dispersed in the solvent or continuous phase; and (3) a structure-directing agent present in an amount sufficient to form a liquid crystalline phase in the mixture, to form a composite of metal-based material and organic matter. Optionally, the organic matter may be removed from the composites. Then, the formed mesoporous particles may be treated or doped with additives, a colorant, charging species, a charge controlling agent, or overcoating with dielectric materials. The charging species or the charge controlling agent may be a donor of electron or proton, an acceptor of electron or proton, metallic, or non-metallic.

According to another embodiment of the present invention, a full color switchable imaging device is also provided. In this embodiment, the switchable imaging device comprises a plurality of microcups comprising charged particles confined therein, wherein each of the microcups is separately filled with a pair of particles having contrast colors and carrying opposite charges, and only one pair of the contrast colors is associated with one of the microcups. That is, each of the microcups of the switchable imaging device may comprise particles of a pair of contrast colors having opposite charges, wherein at least one of the particles is mesoporous. Preferably, the pair of contrast colors is selected from black and white, blue and white, red and white, or green and white, or the pair of contrast colors is selected from black and white, black and cyan, black and magenta, or black and yellow. The charged particles may be mesoporous particles similar or the same with the mesoporous particles described in the above embodiment. For example, the mesoporous particles may be treated or doped with an additive, a colorant, charging species or a charge controlling agent as mentioned.

Fig. 2 shows a schematic diagram of a top view of the full color switchable imaging device. In this embodiment, the switchable imaging device 200 is similar with the switchable imaging device 100 shown in Fig. 1 except that an array of microcups 30a, 30b, 30c comprising pigment particles confined therein are used in the switchable imaging device 200. In an embodiment, each of the microcups 30a, 30b, 30c may comprise a top substrate and bottom substrate with electrodes formed thereon and two kinds pigment particles which comprise contrast colors and charges disposed therebetween.

In this embodiment, the pigment particles may be same or similar with the pigment particles 21 and 23 shown in Fig. 1. The array of microcups 30a, 30b, 30c may provide a full color by at least three different colors. For example, the microcup 30a may comprise pigment particles having contrast colors of red and white and opposite charges, the microcup 30b may comprise pigment particles having contrast colors of green and white and opposite charges, and the microcup 30c may comprise pigment particles having contrast colors of blue and white and opposite charges. Note that, in addition to the three different pair of contrast colors, a microcup having contrast colors of black and white (not shown) also can be further added to the array of the microcups. Alternatively, the microcups 30a, 30b and 30c may have contrast colors selected from cyan and black, magenta and black, and yellow and black, respectively. Note that, in addition to the three different contrast colors, a microcup having contrast colors selected from black and white (not shown) also can be further added to the array of the microcups.

In another embodiment, color filters (not shown) may be disposed on the top substrate or the bottom substrate of each of the microcups for providing the desired colors. The color filters may comprise at least three colors such as red, green and blue. As such, even if the microcups in the switchable imaging device can only image one pair of contrast colors such as black and white, the switchable imaging device can still image full color depending on the use of color filters.

In summary, embodiments of the present invention provide a switchable imaging device using mesoporous particles is provided. The mesoporous particles according to embodiments of the present invention would have high charge density, low gravity density, stability against agglomeration, good hiding power and high contrast ratio, and therefore the problems occurs in the conventional switchable imaging device would be overcome.

The following are examples of the present invention which are directed to the preparation of various kinds of mesoporous particles which may be treated or doped with chagrining species or the charge controlling agent or overacted with the polymer.

### EXAMPLE 1

9.9 ml valeric acid (Aldrich) was injected into the 750 mL ethanol, and then 15 mL titanium isopropoxide (Aldrich) was added. The mixture was then heated to above 85°C for 5 hours. Then, a solution of deionized water and ethanol with ratio of 1 was added to the heated mixture and precipitate of particles was formed. The precipitate was then collected and washed with ethanol to yield TiO2 particles. Following by hydrothermal process with 0.2 M NH4OH solution at 160 °C and calcined at high temperature of 500 °C to give desired TiO₂ mesoporous particles having an average size of 450 nm, a BET surface area of 68 m²/g, and an average pore size of 14 nm (characterized by ASAP2020 from Micromeritics).

### EXAMPLE 2

1 g of the TiO₂ mesoporous particles obtained from Example 1 are reacted with 0.042 g of 3-(trihydroxysilyl)-1-propanesulfonic acid in a 80% methanol/water solution at 90 °C for 3 hours. After completion of the reaction, the modified mesoporous TiO₂ particles were washed thoroughly with ethanol and dried with a stream of N₂.

### EXAMPLE 3

A dispersion formed of 1 g of the TiO₂ mesoporous particles obtained from Example 1 and 3ml of THF/Ethanol solvent was prepared. Then, 0.15 g of Bontron E-84 (Orient Chemical) was added to the dispersion and mixed under sonication for half hour. Then, powder of the charged TiO₂ mesoporous particles was collected by vaporization of solvent, and dried with a stream of N₂.

### EXAMPLE 4

1g of the TiO₂ mesoporous particles obtained from Example 1 were reacted with 0.08 g of trichloro(3,3,4,4,5,5,6,6,7,7,8,8,8-tridecafluorooctyl) silane (Alfa-Aesar) in a 80% methanol/water solution at 90 °C for 3 hours. After completion of the reaction, the modified TiO₂ mesoporous particles were washed thoroughly with ethanol and dried with a stream of N₂.

### EXAMPLE 5

1 g of the TiO₂ mesoporous particles obtained from Example 1 was reacted with 0.043 g of 3-(trichlorosilyl)propyl methacrylate (Aldrich) in a 95% ethanol at room temperature for 2 hours. After completion of the reaction, the modified TiO₂ mesoporous particles were washed thoroughly with ethanol and dried with a stream of N₂. Then, the acrylate-functionalized TiO₂ mesoporous particles were transferred to another flask containing 30 mL of water, 0.1 g of potassium persulfate (Acros), and 1.5 g of methyl mecthacrylate (Acros). A graft polymerization was carried out at 80°C for 24 h with vigorous stirring under N₂. Finally, the resulting was filtered and washed with methanol, and then dried in air. After that, the poly(methyl methacrylate)-coated TiO₂ mesoporous particles were obtained.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the invention is limited to the scope of the appended claims.

## Claims

1. A switchable imaging device, comprising a plurality of particles, at least some of the particles being electrically charged, at least some of the particles being mesoporous particles **characterized in that** the particles are suspended in air.

2. The switchable imaging device of claim 1, wherein the charged particles are tribo-electric interaction charged particles, electron transfer charged particles, proton transfer charged particles, or acid-base reaction charged particles.

3. The switchable imaging device of any preceding claim, wherein at least some of the mesoporous particles are electrically charged.

4. The switchable imaging device of any preceding claim, wherein at least some of the mesoporous particles are statically charged particles.

5. The switchable imaging device of any preceding claim, wherein the switchable imaging device is an electronic display, a signage, a bulletin board, a price tag, a digital barcode, a digital coupon, an e-paper device, or an e-reader device.

6. The switchable imaging device of any preceding claim, wherein the mesoporous particles comprise porous metal oxides, inorganic dielectrics, or inorganic semiconductors having pores of substantially uniform diameter, shape of cross-section or orientation.

7. The switchable imaging device of any preceding claim, wherein the mesoporous particles are overcoated with a dielectric material.

8. The switchable imaging device of any preceding claim, wherein the mesoporous particles are porous metal oxide particles having pores of substantially uniform diameter, shape of cross-section, or orientation.

9. The switchable imaging device of any preceding claims, wherein the mesoporous particles are formed of a material expressed by the formula: MₘY_{y}, where M is an inorganic element; m is the number of moles or mole fraction of M; Y is nitrogen, oxygen, sulphur; and y is the number of moles or mole fraction of Y.

10. The switchable imaging device of any of claims 1 to 8, wherein the mesoporous particles are formed of a material expressed by the formula: MₘY_{y}Z_{z}, where M is an inorganic element; m is the number of moles or mole fraction of M; Y is nitrogen, oxygen, sulphur or hydroxyl; y is the number of moles or mole fraction of Y; Z is nitrogen, oxygen, sulphur or hydroxyl; and z is the number of moles or mole fraction of Z.

11. The switchable imaging device of any of claims 1 to 8, wherein the mesoporous particles are formed of a material expressed by the formula: MₘNₙY_{y}, where M and N are independently inorganic elements; m is the number of moles or mole fraction of M; n is the number of moles or mole fraction of N; Y is nitrogen, oxygen, sulphur or hydroxyl; and y is the number of moles or mole fraction of Y.

12. The switchable imaging device of any claims of 9 toll, wherein the inorganic element is selected from the group consisting of Ti, Mn, Mg, Co, Ni, Al, Cr, Si, Cu, Ag, Zn, Ba, Ca, Fe, Zr, Sn, Pb, Ta, Cd, V, Nb, W, Hf, Ge, Sb, Mo, In, C, N, S, and F.

13. The switchable imaging device of claim 10, wherein the mesoporous particles comprise TiOₐ(OH)_{b}, NiOₐ(OH)_{b}, or MgOₐ(OH₎b, where a and b are integers and a sum of a and b is 2 or 3.

14. The switchable imaging device of any preceding claim, wherein the mesoporous particles comprise pores in a form of column, disc, sheet, or aggregates thereof.

15. The switchable imaging device of any preceding claim, wherein the mesoporous particles have an average particle size ranging from 0.05µm to 20µm.

16. The switchable imaging device of any of claims 1 to 14, wherein the mesoporous particles are aggregates of primary particles having an average diameter ranging from 0.001 µm to 0.5 µm.

17. The switchable imaging device of any preceding claim, wherein the mesoporous particles have an average diameter ranging from 0.1 µm to 0.5 µm.

18. The switchable imaging device of any preceding claim, wherein the mesoporous particles have an average pore size ranging from 3 nm to 50 nm.

19. The switchable imaging device of any preceding claim, wherein the mesoporous particles are treated or doped with an additive, a colorant, charging species, or a charge controlling agent.

20. The switchable imaging device of claim 19, wherein the mesoporous particles are electrically charged by physical adsorption or chemisorption of the charging species or the charge controlling agent onto the plurality of mesoporous particles.

21. The switchable imaging device of claim 19 or 20, wherein the colorant comprises a dye, pigment, or a precursor of dye or pigment.

22. The switchable imaging device of any of claims 19 to 21, wherein the charging species or the charge controlling agent comprises a donor of electron or proton.

23. The switchable imaging device of any of claims 19 to 22, wherein the charging species or the charge controlling agent comprises an acceptor of electron or proton.

24. The switchable imaging device of any of claims 19 to 23, wherein the charging species or the charge controlling agent is metallic.

25. The switchable imaging device of any of claims 19 to 24, wherein the charging species or the charge controlling agent is non-metallic.

26. The switchable imaging device of any of the previous claims, wherein the mesoporous particles further comprise charging species or a charge controlling agent.

27. The switchable imaging device of any of claims 19 to 25, wherein the charge controlling agent comprises a positive charge controlling agent selected from the group consisting of quaternary ammonium salts, pyridinium salts, onium salts, squarium salts, metal salts, nigrosine dye, polyamine resin, triphenylmethane compound, imidazole derivatives, amine derivatives and phosphonium salt.

28. The switchable imaging device of any of claims 19 to 25, wherein the charge controlling agent comprises a negative charge control agent selected from the group consisting of metal complexes of salicylic acid, alkyl-salicylic acid, azo dye, calixarene compound, benzyl acid boron complex, sulfonate salt and fluorocarbon derivatives.

29. The switchable imaging device of claim 28, wherein the metal complexes comprises a metal selected from the group consisting of Cr, Zn, Mg, Co, Al, B, Ni, Fe and Cu.

30. The switchable imaging device of any preceding claim, wherein the plurality of particles are confined in a plurality of microcups.

31. The switchable imaging device of any preceding claim, wherein the particles comprise a pair of contrast colors carrying opposite charges.

32. The switchable imaging device of claim 31, wherein the pair of contrast colors is one of black and white, blue and white, red and white, and green and white, black and white, black and cyan, black and magenta, and black and yellow.

33. A full color switchable imaging device, comprising:
the switchable imaging device of claim 1; and
a color filter disposed adjacent to the switchable imaging device.

34. The full color switchable imaging device of claim 33, wherein the switchable imaging device comprises a pair of black and white particles having opposite charges.

35. The switchable imaging device of any of claims 1 to 29, further comprising an array of microcups, each microcup being filled separately with particles of a pair of contrast colors carrying opposite charges.

36. The switchable imaging device of claim 35, wherein the array of microcups is filled with particles of more than one pair of contrast colors carrying opposite charges, only one pair of the contrast colors is associated with one of the microcups.

37. The switchable imaging device of claim 35, wherein the array of microcups is filled with particles with three pairs of contrast colors carrying opposite charges, only one pair of the contrast colors is associated with one of the microcups.

38. The switchable imaging device of claim 37, wherein the three pairs of contrast colors are blue and white, red and white, and green and white.

39. The switchable imaging device of claim 37, wherein the three pairs of contrast colors are cyan and black, magenta and black, and yellow and black.

40. The switchable imaging device of claim 35, wherein the array of microcups is filled with particles of four pairs of contrast colors carrying opposite charges, only one pair of the contrast colors is associated with one of the microcups.

41. The switchable imaging device of claim 40, wherein the four pairs of contrast colors are black and white, blue and white, red and white, and green and white.

42. The switchable imaging device of claim 40, wherein the four pairs of contrast colors are black and white, cyan and black, magenta and black, and yellow and black.

## Patentansprüche

1. Schaltbare Bildgebungsvorrichtung, umfassend eine Mehrzahl von Partikeln, wobei mindestens einige der Partikel elektrisch geladen sind und mindestens einige der Partikel mesoporöse Partikel sind, **dadurch gekennzeichnet, dass** die Partikel in Luft schweben.

2. Schaltbare Bildgebungsvorrichtung nach Anspruch 1, wobei die geladenen Partikel durch triboelektrische Wechselwirkung geladene Partikel, **durch** Elektronenübertragung geladene Partikel, durch Protonenübertragung geladene Partikel oder durch Säure-Base-Reaktion geladene Partikel sind.

3. Schaltbare Bildgebungsvorrichtung nach einem der vorhergehenden Ansprüche, wobei mindestens einige der mesoporösen Partikel elektrisch geladen sind.

4. Schaltbare Bildgebungsvorrichtung nach einem der vorhergehenden Ansprüche, wobei mindestens einige der mesoporösen Partikel statisch geladene Partikel sind.

5. Schaltbare Bildgebungsvorrichtung nach einem der vorhergehenden Ansprüche, wobei die schaltbare Bildgebungsvorrichtung eine elektronische Anzeige, eine Beschilderung, eine Nachrichtentafel, ein Preisschild, ein digitaler Strichcode, ein digitaler Gutschein, eine E-Papiervorrichtung oder eine E-Reader-Vorrichtung ist.

6. Schaltbare Bildgebungsvorrichtung nach einem der vorhergehenden Ansprüche, wobei die mesoporösen Partikel poröse Metalloxide, anorganische Dielektrika oder anorganische Halbleiter umfassen, die Poren von im Wesentlichen gleichem Durchmesser, gleicher Querschnittsform oder Ausrichtung aufweisen.

7. Schaltbare Bildgebungsvorrichtung nach einem der vorhergehenden Ansprüche, wobei die mesoporösen Partikel mit einem dielektrischen Material beschichtet sind.

8. Schaltbare Bildgebungsvorrichtung nach einem der vorhergehenden Ansprüche, wobei die mesoporösen Partikel poröse Metalloxidpartikel sind, die Poren von im Wesentlichen gleichem Durchmesser, gleicher Querschnittsform oder Ausrichtung aufweisen.

9. Schaltbare Bildgebungsvorrichtung nach einem der vorhergehenden Ansprüche, wobei die mesoporösen Partikel aus einem Material gebildet sind, das durch die folgende Formel dargestellt wird: MₘY_{y}, wobei M ein anorganisches Element ist; m die Molzahl oder der Molenbruch von M ist; Y Stickstoff, Sauerstoff, Schwefel ist; und y die Molzahl oder der Molenbruch von Y ist.

10. Schaltbare Bildgebungsvorrichtung nach einem der Ansprüche 1 bis 8, wobei die mesoporösen Partikel aus einem Material gebildet sind, das durch folgende Formel dargestellt wird: MₘY_{y}Z_{z}, wobei M ein anorganisches Element ist; m die Molzahl oder der Molenbruch von M ist; Y Stickstoff, Sauerstoff, Schwefel oder Hydroxyl ist; y die Molzahl oder der Molenbruch von Y ist; Z Stickstoff, Sauerstoff, Schwefel oder Hydroxyl ist; und z die Molzahl oder der Molenbruch von Z ist.

11. Schaltbare Bildgebungsvorrichtung nach einem der Ansprüche 1 bis 8, wobei die mesoporösen Partikel aus einem Material gebildet sind, das durch folgende Formel dargestellt wird: MₘNₙY_{y}, wobei M und N eigenständige anorganische Elemente sind; m die Molzahl oder der Molenbruch von M ist; n die Molzahl oder der Molenbruch von N ist; Y Stickstoff, Sauerstoff, Schwefel oder Hydroxyl ist; und y die Molzahl oder der Molenbruch von Y ist.

12. Schaltbare Bildgebungsvorrichtung nach einem der Ansprüche 9 bis 11, wobei das anorganische Element aus der Gruppe bestehend aus Ti, Mn, Mg, Co, Ni, Al, Cr, Si, Cu, Ag, Zn, Ba, Ca, Fe, Zr, Sn, Pb, Ta, Cd, V, Nb, W, Hf, Ge, Sb, Mo, In, C, N, S, und F ausgewählt ist.

13. Schaltbare Bildgebungsvorrichtung nach Anspruch 10, wobei die mesoporösen Partikel TiOₐ(OH)_{b}, NiOₐ(OH)_{b} oder MgOₐ(OH)_{b} umfassen, wobei a und b ganze Zahlen sind und eine Summe von a und b 2 oder 3 ist.

14. Schaltbare Bildgebungsvorrichtung nach einem der vorhergehenden Ansprüche, wobei die mesoporösen Partikel Poren in Form einer Säule, Scheibe, Platte oder eines Aggregats derselben umfassen.

15. Schaltbare Bildgebungsvorrichtung nach einem der vorhergehenden Ansprüche, wobei die mesoporösen Partikel eine durchschnittliche Partikelgröße im Bereich von 0,05 µm bis 20 µm aufweisen.

16. Schaltbare Bildgebungsvorrichtung nach einem der Ansprüche 1 bis 14, wobei die mesoporösen Partikel Aggregate von Primärteilchen sind, die einen durchschnittlichen Durchmesser im Bereich von 0,001 µm bis 0,5 µm aufweisen.

17. Schaltbare Bildgebungsvorrichtung nach einem der vorhergehenden Ansprüche, wobei die mesoporösen Partikel einen durchschnittlichen Durchmesser im Bereich von 0,1 µm bis 0,5 µm aufweisen.

18. Schaltbare Bildgebungsvorrichtung nach einem der vorhergehenden Ansprüche, wobei die mesoporösen Partikel eine durchschnittliche Porengröße im Bereich von 3 nm bis 50 nm aufweisen.

19. Schaltbare Bildgebungsvorrichtung nach einem der vorhergehenden Ansprüche, wobei die mesoporösen Partikel mit einem Additiv, einem Färbemittel, mit Ladungsträgerspezies oder einem Ladungssteuerungsmittel behandelt oder dotiert sind.

20. Schaltbare Bildgebungsvorrichtung nach Anspruch 19, wobei die mesoporösen Partikel durch Physisorption oder Chemisorption der Ladungsträgerspezies oder des Ladungssteuerungsmittels auf die Mehrzahl der mesoporösen Partikel elektrisch geladen werden.

21. Schaltbare Bildgebungsvorrichtung nach Anspruch 19 oder 20, wobei das Färbemittel einen Farbstoff, ein Pigment oder eine Vorstufe eines Farbstoffes oder eines Pigments umfasst.

22. Schaltbare Bildgebungsvorrichtung nach einem der Ansprüche 19 bis 21, wobei die Ladungsträgerspezies oder das Ladungssteuerungsmittel einen Elektronen- oder Protonendonator umfassen.

23. Schaltbare Bildgebungsvorrichtung nach einem der Ansprüche 19 bis 22, wobei die Ladungsträgerspezies oder das Ladungssteuerungsmittel einen Elektronen- oder Protonenakzeptor umfassen.

24. Schaltbare Bildgebungsvorrichtung nach einem der Ansprüche 19 bis 23, wobei die Ladungsträgerspezies oder das Ladungssteuerungsmittel metallisch sind.

25. Schaltbare Bildgebungsvorrichtung nach einem der Ansprüche 19 bis 24, wobei die Ladungsträgerspezies oder das Ladungssteuerungsmittel nichtmetallisch sind.

26. Schaltbare Bildgebungsvorrichtung nach einem der vorhergehenden Ansprüche, wobei die mesoporösen Partikel überdies Ladungsträgerspezies oder ein Ladungssteuerungsmittel umfassen.

27. Schaltbare Bildgebungsvorrichtung nach einem der Ansprüche 19 bis 25, wobei das Ladungssteuerungsmittel ein positives Ladungssteuerungsmittel ausgewählt aus der Gruppe bestehend aus Quartärsalzen, Pyridinsalzen, Oniumsalzen, Squariumsalzen, Metallsalzen, Nigrosinfarbstoff, Polyaminharz, Triphenylmethanverbindungen, Imidazolderivaten, Aminderivaten und Phosphoniumsalz umfasst.

28. Schaltbare Bildgebungsvorrichtung nach einem der Ansprüche 19 bis 25, wobei das Ladungssteuerungsmittel eine negatives Ladungssteuerungsmittel ausgewählt aus der Gruppe bestehend aus Metallkomplexen von Salicylsäure, Alkylsalicylsäure, Azofarbstoff, Calixarenverbindungen, Benzylsäure-Borkomplexen, Sulfonatsalz und Fluorkohlenwasserstoffderivaten umfasst.

29. Schaltbare Bildgebungsvorrichtung nach Anspruch 28, wobei die Metallkomplexe ein Metall ausgewählt aus der Gruppe bestehend aus Cr, Zn, Mg, Co, Al, B, Ni, Fe und Cu umfassen.

30. Schaltbare Bildgebungsvorrichtung nach einem der vorhergehenden Ansprüche, wobei die Mehrzahl der Partikel in einer Mehrzahl von Mikrokapseln eingeschlossen ist.

31. Schaltbare Bildgebungsvorrichtung nach einem der vorhergehenden Ansprüche, wobei die Partikel ein Kontrastfarbenpaar umfassen, das entgegengesetzte Ladungen trägt.

32. Schaltbare Bildgebungsvorrichtung nach Anspruch 31, wobei das Kontrastfarbenpaar eines aus Schwarz und Weiß, Blau und Weiß, Rot und Weiß, und Grün und Weiß, Schwarz und Weiß, Schwarz und Cyan, Schwarz und Magenta und Schwarz und Gelb ist.

33. Vollfarbige schaltbare Bildgebungsvorrichtung, Folgendes umfassend:
- schaltbare Bildgebungsvorrichtung nach Anspruch 1; und
- einen Farbfilter, der neben der schaltbaren Bildgebungsvorrichtung angeordnet ist.

34. Vollfarbige schaltbare Bildgebungsvorrichtung nach Anspruch 33, wobei die schaltbare Bildgebungsvorrichtung ein Paar schwarzer und weißer Partikel umfasst, die entgegengesetzte Ladungen aufweisen.

35. Schaltbare Bildgebungsvorrichtung nach einem der Ansprüche 1 bis 29, überdies umfassend eine Anordnung von Mikrokapseln, wobei jede Mikrokapsel einzeln mit Partikeln eines Kontrastfarbenpaars gefüllt ist, die entgegengesetzte Ladungen tragen.

36. Schaltbare Bildgebungsvorrichtung nach Anspruch 35, wobei die Anordnung von Mikrokapseln mit Partikeln von mehr als einem Kontrastfarbenpaar gefüllt ist, die entgegengesetzte Ladungen tragen, nur eines der Kontrastfarbenpaare ist einer der Mikrokapseln zugehörig.

37. Schaltbare Bildgebungsvorrichtung nach Anspruch 35, wobei die Anordnung von Mikrokapseln mit Partikeln mit drei Kontrastfarbenpaaren gefüllt ist, die entgegengesetzte Ladungen tragen, nur eines der Kontrastfarbenpaare ist einer der Mikrokapseln zugehörig.

38. Schaltbare Bildgebungsvorrichtung nach Anspruch 37, wobei die drei Kontrastfarbenpaare Blau und Weiß, Rot und Weiß, und Grün und Weiß sind.

39. Schaltbare Bildgebungsvorrichtung nach Anspruch 37, wobei die drei Kontrastfarbenpaare Cyan und Schwarz, Magenta und Schwarz, und Gelb und Schwarz sind.

40. Schaltbare Bildgebungsvorrichtung nach Anspruch 35, wobei die Anordnung von Mikrokapseln mit Partikeln von vier Kontrastfarbenpaaren gefüllt ist, die entgegengesetzte Ladungen tragen, nur eines der Kontrastfarbenpaare ist einer der Mikrokapseln zugehörig.

41. Schaltbare Bildgebungsvorrichtung nach Anspruch 40, wobei die vier Kontrastfarbenpaare Schwarz und Weiß, Blau und Weiß, Rot und Weiß, und Grün und Weiß sind.

42. Schaltbare Bildgebungsvorrichtung nach Anspruch 40, wobei die vier Kontrastfarbenpaare Schwarz und Weiß, Cyan und Schwarz, Magenta und Schwarz, und Gelb und Schwarz sind.

## Revendications

1. Dispositif d'imagerie commutable, comprenant une pluralité de particules, au moins certaines des particules étant électriquement chargées, au moins certaines des particules étant des particules mésoporeuses, **caractérisé en ce que** les particules sont suspendues dans l'air.

2. Dispositif d'imagerie commutable selon la revendication 1, dans lequel les particules chargées sont des particules chargées par interaction tribo-électrique, des particules chargées par transfert d'électrons, des particules chargées par transfert de protons ou des particules chargées par réaction acido-basique.

3. Dispositif d'imagerie commutable selon l'une quelconque des revendications précédentes, dans lequel au moins certaines des particules mésoporeuses sont électriquement chargées.

4. Dispositif d'imagerie commutable selon l'une quelconque des revendications précédentes, dans lequel au moins certaines des particules mésoporeuses sont des particules statiquement chargées.

5. Dispositif d'imagerie commutable selon l'une quelconque des revendications précédentes, dans lequel le dispositif d'imagerie commutable est un écran d'affichage électronique, une signalisation, un tableau d'affichage, une étiquette de prix, un code-barres numérique, un bon numérique, un dispositif papier électronique ou un dispositif lecteur électronique.

6. Dispositif d'imagerie commutable selon l'une quelconque des revendications précédentes, dans lequel les particules mésoporeuses comprennent des oxydes métalliques poreux, des diélectriques inorganiques ou des semi-conducteurs inorganiques possédant des pores de diamètre, de forme en coupe transversale ou d'orientation sensiblement uniforme.

7. Dispositif d'imagerie commutable selon l'une quelconque des revendications précédentes, dans lequel les particules mésoporeuses sont enrobées d'un matériau diélectrique.

8. Dispositif d'imagerie commutable selon l'une quelconque des revendications précédentes, dans lequel les particules mésoporeuses sont des particules d'oxyde métallique poreuses possédant des pores de diamètre, de forme en coupe transversale ou d'orientation sensiblement uniforme.

9. Dispositif d'imagerie commutable selon l'une quelconque des revendications précédentes, dans lequel les particules mésoporeuses sont constituées d'un matériau exprimé par la formule: MₘY_{y}, où M est un élément inorganique; m est le nombre de moles ou la fraction molaire de M; Y est de l'azote, de l'oxygène, du soufre; et y est le nombre de moles ou la fraction molaire de Y.

10. Dispositif d'imagerie commutable selon l'une quelconque des revendications 1 à 8, dans lequel les particules mésoporeuses sont constituées d'un matériau exprimé par la formule: MₘY_{y}Z_{z}, où M est un élément inorganique; m est le nombre de moles ou la fraction molaire de M; Y est de l'azote, de l'oxygène, du soufre ou de l'hydroxyle; y est le nombre de moles ou la fraction molaire de Y; Z est de l'azote, de l'oxygène, du soufre ou de l'hydroxyle; et z est le nombre de moles ou la fraction molaire de Z.

11. Dispositif d'imagerie commutable selon l'une quelconque des revendications 1 à 8, dans lequel les particules mésoporeuses sont constituées d'un matériau exprimé par la formule : MₘNₙY_{y}, où M et N sont des éléments indépendamment inorganiques; m est le nombre de moles ou la fraction molaire de M; n est le nombre de moles ou la fraction molaire de N; Y est de l'azote, de l'oxygène, du soufre ou de l'hydroxyle; et y est le nombre de moles ou la fraction molaire de Y.

12. Dispositif d'imagerie commutable selon l'une quelconque des revendications 9 à 11, dans lequel l'élément inorganique est sélectionné dans le groupe constitué de Ti, de Mn, de Mg, de Co, de Ni, d'Al, de Cr, de Si, de Cu, d'Ag, de Zn, de Ba, de Ca, de Fe, de Zr, de Sn, de Pb, de Ta, de Cd, de V, de Nb, de W, de Hf, de Ge, de Sb, de Mo, d'In, de C, de N, de S et de F.

13. Dispositif d'imagerie commutable selon la revendication 10, dans lequel les particules mésoporeuses comprennent du TiOₐ(OH)_{b}, du NiOₐ(OH)_{b}, ou du MgOₐ(OH)_{b}, où a et b sont des entiers et une somme de a et de b est égale à 2 ou 3.

14. Dispositif d'imagerie commutable selon l'une quelconque des revendications précédentes, dans lequel les particules mésoporeuses comprennent des pores ayant une forme de colonne, de disque, de feuille ou des regroupements de ceux-ci.

15. Dispositif d'imagerie commutable selon l'une quelconque des revendications précédentes, dans lequel les particules mésoporeuses ont une taille de particule moyenne allant de 0,05 µm à 20 µm.

16. Dispositif d'imagerie commutable selon l'une quelconque des revendications 1 à 14, dans lequel les particules mésoporeuses sont des regroupements de particules primaires ayant un diamètre moyen allant de 0,001 µm à 0,5 µm.

17. Dispositif d'imagerie commutable selon l'une quelconque des revendications précédentes, dans lequel les particules mésoporeuses ont un diamètre moyen allant de 0,1 µm à 0,5 µm.

18. Dispositif d'imagerie commutable selon l'une quelconque des revendications précédentes, dans lequel les particules mésoporeuses ont une taille de pore moyenne allant de 3 nm à 50 nm.

19. Dispositif d'imagerie commutable selon l'une quelconque des revendications précédentes, dans lequel les particules mésoporeuses sont traitées ou dopées avec un additif, un colorant, des espèces de charge ou un agent de régulation de charge.

20. Dispositif d'imagerie commutable selon la revendication 19, dans lequel les particules mésoporeuses sont électriquement chargées par l'adsorption physique ou l'adsorption chimique des espèces de charge ou de l'agent de régulation de charge sur la pluralité de particules mésoporeuses.

21. Dispositif d'imagerie commutable selon la revendication 19 ou 20, dans lequel le colorant comprend une teinture, un pigment ou un précurseur de teinture ou de pigment.

22. Dispositif d'imagerie commutable selon l'une quelconque des revendications 19 à 21, dans lequel les espèces de charge ou l'agent de régulation de charge comprennent un donneur d'électrons ou de protons.

23. Dispositif d'imagerie commutable selon l'une quelconque des revendications 19 à 22, dans lequel les espèces de charge ou l'agent de régulation de charge comprennent un accepteur d'électrons ou de protons.

24. Dispositif d'imagerie commutable selon l'une quelconque des revendications 19 à 23, dans lequel les espèces de charge ou l'agent de régulation de charge sont métalliques.

25. Dispositif d'imagerie commutable selon l'une quelconque des revendications 19 à 24, dans lequel les espèces de charge ou l'agent de régulation de charge sont non métalliques.

26. Dispositif d'imagerie commutable selon l'une quelconque des revendications précédentes, dans lequel les particules mésoporeuses comprennent en outre des espèces de charge ou un agent de régulation de charge.

27. Dispositif d'imagerie commutable selon l'une quelconque des revendications 19 à 25, dans lequel l'agent de régulation de charge comprend un agent de régulation de charge positive sélectionné dans le groupe constitué de sels d'ammonium quaternaire, des sels de pyridinium, des sels d'onium, des sels de squarium, des sels métalliques, un colorant nigrosine, une résine de polyamine, un composé de triphénylméthane, des dérivés d'imidazole, des dérivés d'amine et un sel de phosphonium.

28. Dispositif d'imagerie commutable selon l'une quelconque des revendications 19 à 25, dans lequel l'agent de régulation de charge comprend un agent de régulation de charge négative sélectionné dans le groupe constitué de complexes métalliques d'acide salicylique, d'acide alkyl-salicylique, de colorant azoïque, de composé de calixarène, de complexe de bore d'acide benzyle, de sel de sulfonate et de dérivés de fluorocarbures.

29. Dispositif d'imagerie commutable selon la revendication 28, dans lequel les complexes métalliques comprennent un métal sélectionné dans le groupe constitué de Cr, de Zn, de Mg, de Co, d'Al, de B, de Ni, de Fe et de Cu.

30. Dispositif d'imagerie commutable selon l'une quelconque des revendications précédentes, dans lequel la pluralité de particules sont confinées dans une pluralité de micro-coupelles.

31. Dispositif d'imagerie commutable selon l'une quelconque des revendications précédentes, dans lequel les particules comprennent une paire de couleurs de contraste portant des charges opposées.

32. Dispositif d'imagerie commutable selon la revendication 31, dans lequel la paire de couleurs de contraste est une paire parmi noir et blanc, bleu et blanc, rouge et blanc, vert et blanc, noir et blanc, noir et cyan, noir et magenta et noir et jaune.

33. Dispositif d'imagerie commutable tout en couleur, comprenant:
le dispositif d'imagerie commutable selon la revendication 1; et
un filtre coloré disposé adjacent au dispositif d'imagerie commutable.

34. Dispositif d'imagerie commutable tout en couleur selon la revendication 33, dans lequel le dispositif d'imagerie commutable comprend une paire de particules noir et blanc ayant des charges opposées.

35. Dispositif d'imagerie commutable selon l'une quelconque des revendications 1 à 29, comprenant en outre un ensemble de micro-coupelles, chaque micro-coupelle étant remplie séparément de particules d'une paire de couleurs de contraste portant des charges opposées.

36. Dispositif d'imagerie commutable selon la revendication 35, dans lequel l'ensemble de micro-coupelles est rempli de particules de plus d'une paire de couleurs de contraste portant des charges opposées, seule une paire des couleurs de contraste étant associée à une des micro-coupelles.

37. Dispositif d'imagerie commutable selon la revendication 35, dans lequel l'ensemble de micro-coupelles est rempli de particules ayant trois paires de couleurs de contraste portant des charges opposées, seule une paire des couleurs de contraste étant associée à une des micro-coupelles.

38. Dispositif d'imagerie commutable selon la revendication 37, dans lequel les trois paires de couleurs de contraste sont bleu et blanc, rouge et blanc, et vert et blanc.

39. Dispositif d'imagerie commutable selon la revendication 37, dans lequel les trois paires de couleurs de contraste sont cyan et noir, magenta et noir, et jaune et noir.

40. Dispositif d'imagerie commutable selon la revendication 35, dans lequel l'ensemble de micro-coupelles est rempli de particules de quatre paires de couleurs de contraste portant des charges opposées, seule une paire des couleurs de contraste étant associée à une des micro-coupelles.

41. Dispositif d'imagerie commutable selon la revendication 40, dans lequel les quatre paires de couleurs de contraste sont noir et blanc, bleu et blanc, rouge et blanc, et vert et blanc.

42. Dispositif d'imagerie commutable selon la revendication 40, dans lequel les quatre paires de couleurs de contraste sont noir et blanc, cyan et noir, magenta et noir, et jaune et noir.
